# EUROPÄISCHE PATENTSCHRIFT

(11) **EP 3 112 682 B1**
(45) Veröffentlichungstag und Bekanntmachung des Hinweises auf die Patenterteilung: **07.07.2021**
(21) Anmeldenummer: 16163387.0
(22) Anmeldetag: 12.05.2014
(51) Int. Cl.: F04C 2/107, F04C 15/00

(54) **EXZENTERSCHNECKENPUMPE MIT MONTAGE DURCH DEN HOHLEN ROTOR**
ECCENTRIC SCREW PUMP WITH ASSEMBLY THROUGH THE HOLLOW ROTOR
POMPE A VIS SANS FIN EXCENTRIQUE AVEC MONTAGE À TRAVERS LE ROTOR CREUX

(43) Veröffentlichungstag der Anmeldung: 04.01.2017
(62) Teilanmeldung aus: 14167930.8
(73) Patentinhaber: Hugo Vogelsang Maschinenbau GmbH, 49632 Essen (DE)
(72) Erfinder: Krampe, Paul, 49632 Essen (DE)
(74) Vertreter: Eisenführ Speiser

(56) Entgegenhaltungen:
- EP-A1- 1 921 318
- US-A- 4 140 444
- US-A- 5 688 114
- None

## Beschreibung

Die Erfindung betrifft eine Exzenterschneckenpumpe, umfassend einen Rotor, der sich entlang einer Rotorlängsachse von einem Antriebsende zu einem freien Ende erstreckt, ein Statorgehäuse mit einem Innenraum, der sich entlang der Längsachse von einer Statoreinlassöffnung zu einer Statoraustrittsöffnung erstreckt und ausgebildet ist, um den Rotor aufzunehmen, einen Antriebsmotor mit einer Antriebswelle, die mit dem Rotor zur Übertragung eines Drehmoments gekoppelt ist, ein erstes Kardangelenk, welches in die Übertragung des Drehmoments zwischen die Antriebswelle und den Rotor eingesetzt ist, und einen Statorausgangsflansch, der in Strömungsrichtung hinter dem Rotor angeordnet ist.

Eine Exzenterschneckenpumpe ist eine Verdrängerpumpe, bei der ein rotierendes Teil, der Rotor, in einem feststehenden Teil, dem Stator oder Statorgehäuse sich bewegt. Der Rotor führt dabei eine Rotationsbewegung sowie eine hierzu überlagerte radiale Bewegung aus, er bewegt sich dadurch auf einer Kreisbahn und dreht sich zusätzlich um die eigene Achse. Der Rotor weist außenumfänglich eine Art Rundgewindeschraube mit großer Steigung auf, die sich in einem Hohlraum innerhalb des Stators bewegt, der solcher Art gestaltet ist, dass sich durch die Bewegung des Rotors in dem Stator Förderräume von der Einlassseite zur Austrittsseite bewegen. Typischerweise ist auf der Einlassseite der Stator/Rotoranordnung einer Exzenterschneckenpumpe ein Zuführraum für das zu fördernde Fluid vorhanden, der mit der Statoreintrittsöffnung in Fluidverbindung steht. In diesem Zuführraum dreht sich eine Antriebswelle, die aufgrund der Rotorbewegung eine taumelnde Bewegung ausführen muss. Diese Antriebswelle wird typischerweise durch zwei über eine Taumelwelle verbundende Kardangelenke gebildet und ist mit dem Antriebsmotor auf der dem Rotor gegenüberliegenden Seite direkt oder indirekt gekoppelt.

Exzenterschneckenpumpen werden einlassseitig typischerweise mit einen Zuführrohr verbunden, über welches das zu fördernde Fluid der Statorgehäuseeintrittsöffnung zugeführt wird. Auslassseitig werden Exzenterschneckenpumpen mit einem Austrittsrohr verbunden, über welches das geförderte Fluid abgeführt wird. Grundsätzlich eignen sich Exzenterschneckenpumpen für eine Förderung von Medien in beiden Richtungen. Entsprechend kann im Sinne dieser Offenbarung auch eine Umkehr der Förderrichtung mit einem entsprechenden funktionellen Austausch der Statoreinlassöffnung und der Statoraustrittsöffnung erfolgen.

Exzenterschneckenpumpen eignen sich zur Förderung zahlreicher, sehr unterschiedlicher Fluide. Hierunter fallen insbesondere zähflüssige und viskose Medien, die auch mit abrasiv wirkenden Feststoffen versetzt sein können. Grundsätzlich ist zu verstehen, dass das erste und/oder das zweite Kardangelenk als klassische Kardangelenke mit zwei senkrecht zueinander stehenden Schwenkachsen ausgeführt sein können. Es sind aber auch hiervon abweichende Ausgestaltungen mit gleicher Funktion als Kardangelenk im Sinne der Erfindung zu verstehen, beispielsweise Elastomerkupplungen, welche eine entsprechende Verschwenkung bei gleichzeitiger Rotation und Drehmomentübertragung bereitstellen.

Grundsätzlich, insbesondere aber bei Einsatz einer Exzenterschneckenpumpe zur Förderung von Fluiden in Form feststoffhaltiger Medien wird aufgrund von Verschleiß des Stators und möglicherweise Verschleiß des Rotors in regelmäßigen Wartungsintervallen der Austausch des Stators und gegebenenfalls des Rotors erforderlich. Zu diesem Zweck muss der Rotor antriebsseitig gelöst werden und durch entsprechende Lösung der Flanschverbindungen des Statorgehäuses ein ausreichender Platz geschaffen werden, um den Rotor aus dem Stator zu entfernen oder die gesamte Rotor-Statoreinheit zu entfernen. Dieser Vorgang ist regelmäßig aufwendig, aufgrund des bei typischen Baugrößen von Exzenterschneckenpumpen erheblichen Gewichts des Stators und insbesondere der Stator-Rotoreinheit schwierig und nur mit entsprechendem Werkzeug und Hebegerät zu bewirken. Die Stillstandszeit einer Exzenterschneckenpumpe aufgrund einer solchen notwendigen Wartung kann durchaus mehrere Stunden bis zu einem Tag betragen. Aus DE 10 2008 021 919 ist eine Exzenterschneckenpumpe vorbekannt, bei der zwischen dem Stator und einem Anschlussstutzen für eine Austrittsrohrleitung ein Distanzring angeordnet ist. Durch Herausnahme dieses Distanzrings wird die Demontage des Stators erleichtert, indem nach Trennung des Rotors von dem Kardangelenk der Rotor mitsamt Stator verschwenkt werden kann. Nachteilig an dieser Konstruktion ist die hier notwendige Trennung des Rotors von dem Kardangelenk für diese Verschwenkung, die einen wartungstechnisch schwierigen Eingriff erforderlich macht. Weiterhin nachteilig an dieser Konstruktion ist die Erzeugung zusätzlicher Dichtflächen im Bereich der Statoraustrittsöffnung, also auf der Druckseite der Exzenterschneckenpumpe, welche die Gefahr von Leckagen hervorruft. Weiterhin nachteilig ist, dass gerade bei Blockaden durch Fremdkörper im Bereich der Austrittsöffnung die Herausnahme des Distanzstücks durch solche Fremdkörper ebenfalls blockiert werden kann, wodurch die Herausnahme des Distanzstückes behindert oder unmöglich gemacht werden kann und folglich die Wartung in dieser Form nicht mehr durchgeführt werden kann.

Aus EP1 921 318 A1 ist eine Exzenterschneckenpumpe vorbekannt, welche einen Rotor oder eine Antriebswelle mit einer Durchgangsbohrung aufweist, durch die sich ein Zugbolzen erstreckt, der zur Befestigung einer flexiblen Stange an dem Rotor bzw. der Antriebswelle dient. Aus US5688114 ist eine Exzenterschneckenpumpe vorbekannt, deren Rotor mittels einer Taumelwelle und zwei Universalgelenken mit einer Antriebswelle verbunden ist.

Der Erfindung liegt die Aufgabe zugrunde, eine Exzenterschneckenpumpe bereitzustellen, welche eine vereinfachte Wartung ermöglicht.

Diese Aufgabe wird erfindungsgemäß gelöst durch eine Exzenterschneckenpumpe der eingangs beschriebenen Bauart, bei welcher der Rotor mittels einer ersten Welle-Nabe-Verbindung mit dem ersten Kardangelenk verbunden ist, dass der Rotor einen sich entlang der Längsachse erstreckenden Hohlraum aufweist und dass ein erstes Spannelement, das auf der Seite der Statoreinlassöffnung mit der ersten Welle-Nabe-Verbindung verbunden ist, sich durch diesen Hohlraum erstreckt und auf der Seite der Statoraustrittsöffnung mit einem Werkzeug betätigbar ist oder mittels eines sich durch diesen Hohlraum erstreckenden Werkzeugs betätigbar ist, und dass von der Seite der Statoraustrittsöffnung aus mittels des an das erste Spannelement angesetzten Werkzeugs die erste Welle-Nabe-Verbindung verbunden und gelöst werden kann.

Gemäß der Erfindung wird eine spezielle Problematik adressiert, die bei der Wartung von Exzenterschneckenpumpen auftritt. Zur Entnahme des Rotors aus dem Statorgehäuse muss der Rotor typischerweise von der Antriebswelle des Antriebsmotors getrennt werden. Diese Trennung erfolgt typischerweise an einer Verbindung zwischen dem ersten Kardangelenk und dem Rotor, diese Verbindung ist zu diesem Zweck lösbar ausgeführt. Es ist vorbekannt, diese Verbindung beispielsweise durch mehrere, umfänglich an einem Ringflansch verteilte Schrauben auszuführen, die dann durch eine Wartungsöffnung zugänglich sind und gelöst werden können. Nachteilig ist jedoch einerseits die Notwendigkeit einer Wartungsöffnung, die typischerweise in einem Fluidzufuhrgehäuse, das den Fluidzufuhrraum umgibt, angeordnet sein muss, andererseits die aufwendige Lösung dieser Schrauben in dem typischerweise fluidgefüllten Raum, was durch Verschmutzung der Schraubverbindung regelmäßig erschwert wird.

Erfindungsgemäß wird diese Problematik gelöst, indem die Trennung des Rotors von der Antriebswelle ohne eine solche direkte Lösung von Schrauben mit Werkzeugen im direkten Zugriff auf die erste Welle-Nabe-Verbindung zwischen dem ersten Kardangelenk und dem Rotor durch eine solche Wartungsöffnung erfolgen kann. Zu diesem Zweck ist der Rotor mit einem sich in dessen Längsrichtung ersteckenden Hohlraum versehen, der den Rotor vollständig durchsetzt. Durch diesen Hohlraum kann nun eine entsprechende Lösung der Verbindung zwischen dem ersten Kardangelenk und dem Rotor erfolgen. Die Verbindung zwischen dem Rotor und dem ersten Kardangelenk kann dabei in verschiedener Weise ausgeführt sein kann. So kann eine kraftschlüssige oder formschlüssige Verbindung oder eine vorgespannte formschlüssige Verbindung zum Einsatz kommen. Der Hohlraum in dem Rotor kann dabei auf zwei verschiedene Arten dazu dienen, diese Welle-Nabe-Verbindung vereinfacht zu lösen. In einer ersten Variante erstreckt sich durch den Hohlraum ein Spannelement, welches dazu dient, eine Zugkraft auf einen Flanschteil, der mit dem ersten Kardangelenk verbunden ist, gegen ein Flanschelement, das mit dem Rotor verbunden ist, auszuüben. Dieses Spannelement kann beispielsweise ein Zuganker sein, der auf der Statoraustrittsseite mit einer entsprechenden Spannvorrichtung, beispielsweise einem Außengewinde, auf das eine Spannmutter aufgeschraubt ist, die sich am Rotor abstützt, ausgeführt sein. Bei dieser Ausführungsform kann die Welle-Nabe-Verbindung zwischen Rotor und erstem Kardangelenk bequem mit üblichem Werkzeug gelöst werden, indem diese Spannvorrichtung an dem Spannelement gelöst wird und die Zugkraft, welche die Verbindung herstellt oder sichert, aufgehoben wird.

In einer zweiten Variante ist das Spannelement nur auf der Statoreinlassseite angeordnet und übt dort eine die Welle-Nabe-Verbindung sichernde oder herstellende Verbindungskraft aus. Hier kann beispielsweise eine Schraube mit einer innenliegenden Werkzeugangriffsfläche eingesetzt werden, die sich in einem Absatz in dem Rotor abstützt und in ein Innengewinde in einem Flanschelement, das mit dem ersten Kardangelenk verbunden ist, eingeschraubt ist. Bei dieser Variante wird das Spannelement mittels eines Werkzeugs, das durch den Hohlraum im Rotor hindurchgeführt wird, erreicht und kann gelöst bzw. gespannt werden, um die Welle-Nabe-Verbindung zu lösen bzw. herzustellen.

Das Spannelement kann bei diesem Aspekt vorzugsweise ein Zuganker sein, der sich über die gesamte Länge des Hohlraums im Rotor erstreckt oder der nur auf der Statoreinlassseite innerhalb des Rotors angeordnet ist. Auf diesen Zuganker ist dann eine Spannmutter aufgesetzt, die entsprechend auf der Statoraustrittsseite oder der Statoreinlassseite angeordnet ist und mit entsprechendem Werkzeug direkt oder durch den Hohlraum zugänglich ist.

Gemäß eines weiteren Aspekts der Erfindung kann die eingangs beschriebene Exzenterschneckenpumpe oder die zuvor erläuterte Exzenterschneckenpumpe weiter fortgebildet werden, indem der Rotor mittels einer ersten Welle-Nabe-Verbindung mit dem ersten Kardangelenk verbunden ist und dass die erste Welle-Nabe-Verbindung als erste Kegelstumpfverbindung ausgeführt ist.

Unter einer Kegelstumpfverbindung ist hierbei eine spezifische Welle-Nabe-Verbindung zu verstehen, bei der eine konische Außenumfangsfläche mit einer kongruenten konischen inneren Umfangsfläche zusammenwirkt und für die Ausrichtung des Rotors zum ersten Kardangelenk und die Drehmomentübertragung vom ersten Kardangelenk auf den Rotor sorgt. Die Drehmomentübertragung erfolgt hierbei durch eine kraftschlüssige Übertragung zwischen den konischen Flächen der Kegelstumpfverbindung. Die hierfür notwendige Anpresskraft wird durch eine axiale Spannkraft zwischen der inneren und der äußeren konischen Umfangsfläche erzielt. Grundsätzlich kann die innere Umfangsfläche am Rotor und die äußere Umfangsfläche am ersten Kardangelenk ausgebildet sein oder umgekehrt. Die konischen Umfangsflächen können an separaten Kegelstumpfflanschelementen ausgebildet sein, die ihrerseits mit dem Rotor bzw. dem ersten Kardangelenk lösbar oder unlösbar verbunden oder können integral am Rotor bzw. am ersten Kardangelenk ausgebildet sein. Insbesondere am Rotor ist eine integrale Ausbildung der konischen Fläche bevorzugt, wohingegen am Kardangelenk eine separate Ausbildung der konischen Fläche bevorzugt ist.

Durch die Bereitstellung einer Kegelstumpfverbindung wird eine vereinfachte Lösbarkeit der Verbindung zwischen Rotor und erstem Kardangelenk erzielt. Insbesondere kann die Kegelstumpfverbindung in einfacher Weise durch eine in Längsrichtung des Rotors wirkende Zugkraft montiert und befestigt werden, hat eine selbstzentrierende Wirkung und ist weitestgehend unempfindlich gegenüber Drehmomentspitzen. Die Lösung der Kegelstumpfverbindung kann durch Entfernen der verspannenden Zugkraft erreicht werden, gegebenenfalls unterstützt durch eine abdrückende Kraft, die durch einen entsprechend angesetzten Abzieher, der eine entgegen der Spannkraft wirkende Druckkraft, welche die Welle-Nabe-Verbindung auseinander bewegt, ausübt. Es ist zu verstehen, dass die Ausgestaltung der Welle-Nabe-Verbindung zwischen Rotor und erstem Kardangelenk mittels Kegelstumpfverbindung besonders vorteilhaft ist, wenn ein Rotor mit einem darin ausgebildeten Hohlraum gemäß des zuvor erläuterten Aspekts der Erfindung zum Einsatz kommt. Bei dieser kombinierten Ausgestaltung kann die für das Festsetzen der Kegelstumpfverbindung erforderliche Spannkraft durch ein Spannelement in dem Hohlraum bzw. ein über den Hohlraum mit einem Werkzeug zugängliches Spannelement bewirkt werden und auch die für das Lösen der Kegelstumpfverbindung notwendige Abdrückkraft kann über den Hohlraum bzw. über das Spannelement, das sich durch dieses Hohlraum erstreckt, aufgebracht werden. Auf diese Weise kann sowohl das Lösen als auch das Festziehen der Welle-Nabe-Verbindung zwischen Rotor und erstem Kardangelenk vollständig von der Statorgehäuseaustrittsseite her erfolgen.

Entsprechend ist es gemäß einer weiteren bevorzugten Ausführungsform vorgesehen, dass das erste Spannelement mit einem mit dem ersten Kardangelenk verbundenen ersten Kegelstumpfelement der ersten Kegelstumpfverbindung verbunden ist und über das erste Spannelement eine Zugkraft auf die erste Kegelstumpfverbindung ausgeübt wird, welche das erste Kegelstumpfelement kraftschlüssig mit einem zweiten Kegelstumpfelement der ersten Kegelstumpfverbindung verpresst, das mit dem Rotor verbunden ist, und dass von der Seite der Statoraustrittsöffnung aus mittels eines an das erste Spannelement angesetzten Werkzeugs die erste Kegelstumpfverbindung verbunden und gelöst werden kann.

Gemäß eines weiteren Aspekts der Erfindung kann die eingangs beschriebene Exzenterschneckenpumpe oder die zuvor erläuterte Exzenterschneckenpumpe fortgebildet werden, indem das erste Kardangelenk mit einer Taumelwelle verbunden ist, die mit einem zweiten Kardangelenk verbunden ist, das mittels einer zweiten Welle-Nabe-Verbindung mit einer mit dem Antriebsmotor gekoppelten Hohlwelle verbunden ist, und dass die zweite Welle-Nabe-Verbindung durch ein zweites Spannelement verbunden und gelöst werden kann, wobei sich das zweite Spannelement durch die Hohlwelle erstreckt, auf der Seite des zweiten Kardangelenks mit der zweiten Welle-Nabe-Verbindung verbunden ist, und auf der dem zweiten Kardangelenk gegenüberliegenden Seite der Hohlwelle mit einem Werkzeug betätigbar ist, oder das zweite Spannelement mittels eines sich durch die Hohlwelle erstreckenden Werkzeugs betätigbar ist, und dass von der dem zweiten Kardangelenk gegenüberliegenden Seite der Hohlwelle aus mittels des an das zweite Spannelement angesetztem Werkzeugs die zweite Welle-Nabe-Verbindung verbunden und gelöst werden kann.

Mit diesem Aspekt der Erfindung wird ein weiteres Problem gelöst, welches bei der Wartung von Exzenterschneckenpumpen auftreten kann. Bei hoher Beanspruchung und/oder hohem Verschleiß oder Trockenlauf oder einer Kombination hieraus kann ein Rotor einer Exzenterschneckenpumpe sich innerhalb des Statorgehäuses festsetzen und ist dann darin sowohl hinsichtlich einer Rotationsbewegung als auch hinsichtlich einer radialen oder axialen Bewegung blockiert. Diese Blockadesituation wird als "festgefressener Rotor" bezeichnet und erfordert regelmäßig einen Austausch von Rotor und Statorgehäuse, um die Exzenterschneckenpumpe wieder betreiben zu können. Problematisch an dieser Blockade ist jedoch, dass für die vereinfachte Wartung der Exzenterschneckenpumpe häufig eine Relativbewegung zwischen Statorgehäuse und Rotor notwendig ist, um die Demontage durchführen zu können. Eine Demontage eines Statorgehäuses mit darin blockiertem Rotor stellt regelmäßig aufgrund der erschwerten Zugänglichkeit diverser Schraubverbindungen eine erhebliche Problematik dar.

Dieses Problem der erschwerten oder unmöglichen Demontage gilt generell für Exzenterschneckenpumpen, ist insbesondere aber auch für die Exzenterschneckenpumpe der zuvor beschriebenen Bauweise mit der Möglichkeit einer Verschwenkung des Statorgehäuses relevant. Diese Verschwenkung des Statorgehäuses muss bei der vereinfachten Wartung der zuvor beschriebenen Exzenterschneckenpumpe erfolgen, bevor die Welle-Nabe-Verbindung zwischen dem Rotor und dem ersten Kardangelenk gelöst ist. Erst nach der erfolgten Verschwenkung wird in der bevorzugten Ausführungsform der Erfindung der Hohlraum innerhalb des Rotors zugänglich und das dort angeordnete Spannelement kann mit einem Werkzeug betätigt werden, um die Welle-Nabe-Verbindung zwischen Rotor und erstem Kardangelenk zu lösen. In diesem Fall ist für die Verschwenkung des Statorgehäuses jedoch aufgrund der unterschiedlichen Schwenkachsen von Rotor und Statorgehäuse eine Relativbewegung zwischen Rotor und Statorgehäuse notwendig, da ansonsten eine Blockade gegen diese Verschwenkung vorhanden ist.

Um daher gemäß dieses Aspekts der Erfindung auch dann eine vereinfachte Wartung an einer Exzenterschneckenpumpe durchführen zu können, wenn der Rotor in dem Statorgehäuse blockiert ist, wird in einfacher Weise eine Lösung der Welle-Nabe-Verbindung zwischen dem zweiten Kardangelenk und einer mit dem Antriebsmotor gekoppelten Welle ermöglicht. Dies wird erreicht, indem diese zweite Welle-Nabe-Verbindung durch einen Hohlraum in einer Hohlwelle, die mit dem Antriebsmotor gekoppelt ist, lösbar bzw. festsetzbar ist.

Durch diese Ausgestaltung wird es ermöglicht, bei blockiertem Rotor innerhalb des Statorgehäuses die zweite Welle-Nabe-Verbindung ohne größeren Aufwand zu lösen und hierdurch eine einfache axiale Beweglichkeit der blockierten Einheit aus Statorgehäuse und Rotor bereitzustellen. Durch diese axiale Beweglichkeit wird einerseits eine vereinfachte Demontage der blockierten Einheit aus Statorgehäuse und Rotor ermöglicht. Darüber hinaus wird durch diese Entkopplung des Rotors von dem Antriebsmotor ein Verschwenken des Statorgehäuse mitsamt des darin blockierten Rotors ermöglicht, wodurch nach erfolgter Verschwenkung entweder die gesamte Einheit bestehend aus Statorgehäuse, Rotor, erstem und zweitem Kardangelenk sowie der Taumelwelle entfernt werden kann oder aber die nun für eine Lösung zugängliche erste Welle-Nabe-Verbindung zwischen Rotor und erstem Kardangelenk gelöst werden kann und dann die Einheit aus Rotor und Statorgehäuse entfernt werden kann.

Hinsichtlich der Ausgestaltung des Spannelements in der ersten und zweiten Variante, der daraus resultierenden Vorteile und Bedienungsmöglichkeiten wird auf die voranstehenden Beschreibung der zwei Varianten des ersten Spannelements in Verbindung mit dem Hohlraum im Rotor hingewiesen, die dort gegebenen Erläuterungen sind in gleicher Weise für das zweite Spannelement und den Hohlraum in der Hohlwelle anwendbar.

Dabei ist es besonders bevorzugt, wenn die zweite Welle-Nabe-Verbindung als zweite Kegelstumpfverbindung ausgeführt ist, und das zweite Spannelement mit einem mit dem zweiten Kardangelenk verbundenen ersten Kegelstumpfelement der zweiten Kegelstumpfverbindung verbunden ist und über das zweite Spannelement eine Zugkraft auf die zweite Kegelstumpfverbindung ausgeübt wird, welche das erste Kegelstumpfelement kraftschlüssig mit einem zweiten Kegelstumpfelement der zweiten Kegelstumpfverbindung verpresst, welches mit der Hohlwelle verbunden ist. Durch die Bereitstellung einer Kegelstumpfverbindung zwischen dem zweiten Kardangelenk und der Hohlwelle wird wiederum eine robuste und mittels des Spannelements gut zu lösende und festzusetzende Welle-Nabe-Verbindung bereitgestellt. Die zweite Welle-Nabe-Verbindung kann dabei in gleicher Form und Funktion wie die erste Welle-Nabe-Verbindung ausgeführt werden und die zuvor gegebenen Erläuterungen im Hinblick auf die erste Welle-Nabe-Verbindungen gelten sinngemäß auch für die zweite Welle-Nabe-Verbindung. Insbesondere ist es bevorzugt, wenn die erste Welle-Nabe-Verbindung mit gleichen Abmessungen und unter Verwendung von Gleichteilen aufgebaut sind, beispielsweise kann das Kegelstumpfelement, welches mit dem ersten Kardanelement verbunden ist, baugleich mit dem Kegelstumpfelement, welches mit dem zweiten Kardangelenk verbunden, sein.

Noch weiter ist es bevorzugt, wenn die Hohlwelle mittels eines Getriebes, insbesondere eines Stirnradgetriebes oder eines Flachgetriebes mit der Antriebswelle des Antriebsmotors gekoppelt ist. Durch die Kopplung der Hohlwelle mit dem Antriebsmotor über ein Getriebe wird die Zugänglichkeit des Hohlraums in der Hohlwelle erleichtert, indem eine räumliche Trennung der Hohlwelle von dem Antriebsmotor ermöglicht wird. Insbesondere kann mittels eines Stirnradgetriebes ein radialer Versatz zwischen der Hohlwelle und der Antriebswelle des Antriebsmotors erreicht werden, der eine einfache Zugänglichkeit der Hohlwelle in ihrer axialen Richtung eröffnet.

Die erfindungsgemäße Exzenterschneckenpumpe kann fortgebildet werden, indem um das erste und/oder das zweite Kardangelenk eine erste bzw. zweite Manschette angeordnet ist, welche einen schmiermittelgefüllten Innenraum, in dem sich das erste bzw. zweite Kardangelenk befindet, gegen die Umgebung abdichtet.

Hiermit wird eine Problematik im Zusammenhang mit der Wartung von Exzenterschneckenpumpen adressiert, welche spezifisch durch die Bereitstellung von Kardangelenken in einem Zutrittsraum für das Fluid ihre Ursache hat. Da die Fluide, welche mit Exzenterschneckenpumpen gefördert werden, häufig mit Feststoffen beladen sind und daher sowohl mechanisch wie auch chemisch aggressiv wirken können, ist es vorteilhaft, wenn die Lagerstellen von Kardangelenken nicht direkt dem Fluid ausgesetzt sind. Dies kann nach dem Stand der Technik erreicht werden, indem die Lagerstellen von Kardangelenken mit entsprechenden Dichtungsringen abgedichtet werden, um den Zutritt von Fluid zu verhindern. Allerdings hat sich diese Bauart mit gekapselten Lagerstellen als nicht zuverlässig im Langzeitbetrieb erwiesen. Erfindungsgemäß wird daher vorgeschlagen, eine Manschette um das erste und/oder das zweite Kardangelenk bereitzustellen. Dabei ist zu verstehen, dass einerseits eine einzelne Manschette um das erste Kardangelenk bereitgestellt sein kann und das zweite Kardangelenk nicht geschützt wird, ebenso aber auch das zweite Kardangelenk mit einer separaten Manschette oder beide geschützt sein können.

Durch diese Bereitstellung wird das gesamte Kardangelenk von dem Fluid, welches mit der Exzenterschneckenpumpe gefördert wird, abgedichtet. Die um das Kardangelenk herum angeordnete Manschette erlaubt eine Schmiermittelfüllung innerhalb der Manschette, sodass das Kardangelenk innerhalb eines Schmiermittels, wie beispielsweise Öl, sich bewegt und folglich praktisch verschleißfrei arbeiten kann.

Dabei ist es besonders bevorzugt, wenn das erste Kardangelenk mittels einer ersten Welle-Nabe-Verbindung, umfassend einen kardangelenkseitigen Flansch und einen mit diesem lösbar verbundenen rotorseitigen Flansch mit dem Rotor gekoppelt ist und dass die erste Manschette sich ausgehend von einer abdichtenden Befestigung an dem kardangelenkseitigen Flansch über das erste Kardangelenk erstreckt, und/oder dass das zweite Kardangelenk mittels einer zweiten Welle-Nabe-Verbindung, umfassend einen kardangelenkseitigen Flansch und einen mit diesem lösbar verbundenen antriebswellenseitigen Flansch, mit der Antriebswelle gekoppelt ist und dass die zweite Manschette sich ausgehend von einer abdichtenden Befestigung an dem kardangelenkseitigen Flansch über das zweite Kardangelenk erstreckt. Bei dieser Ausführungsform ist die Manschette jeweils so abgedichtet um das Kardangelenk herum angeordnet, dass die Welle-Nabe-Verbindung zwischen dem ersten Kardangelenk und dem Rotor bzw. zwischen dem zweiten Kardangelenk und der Antriebswelle oder einer mit der Antriebswelle gekoppelten Welle getrennt werden kann, ohne dass die Manschette hierfür gelöst werden muss. Die Manschette ist jeweils auf dem kardangelenksseitigen Flansch abgedichtet befestigt, der nach Lösung der Welle-Nabe-Verbindung am Kardangelenk verbleibt. Dies ermöglicht es, die Schmiermittelfüllung innerhalb der Manschette auch im Zuge von Wartungsarbeiten unverändert zu belassen und vermeidet einen Wechsel dieses Schmiermittels, wenn beispielweise ein Rotor ausgetauscht werden muss.

Noch weiter ist es bevorzugt, wenn die erste und zweite Manschette als eine einzige Manschette integral ausgeführt sind und dass ein erstes Ende der Manschette auf einer zwischen dem ersten Kardangelenk und dem Rotor angeordneten Umfangsfläche abdichtend befestigt ist und das ein zweites Ende der Manschette auf einer zwischen dem zweiten Kardangelenk und einer Antriebswelle, insbesondere der Hohlwelle, angeordneten Umfangsfläche abdichtend befestigt ist. Bei dieser Ausführungsform sind sowohl das erste als auch das zweite Kardangelenk von einer Manschette umgeben und folglich gekapselt, wobei sich die Manschette als einzige Manschette über das erste Kardangelenk, die das erste mit dem zweiten Kardangelenk verbindende Taumelwelle und das zweite Kardangelenk erstreckt. Die solcher Art ausgeführte integrale Manschette ist folglich jeweils auf der der Taumelwelle gegenüberliegenden Seite der beiden Kardangelenke auf einem entsprechenden Flansch der dort angeordneten Welle-Nabe-Verbindung zum Rotor bzw. zur Antriebswelle oder einer mit der Antriebswelle gekoppelten Welle abgedichtet befestigt. Die Einheit aus Taumelwelle mit erstem und zweitem Kardangelenk stellt daher in sich eine geschlossene, gekapselte Einheit dar, die beidseits durch entsprechende Welle-Nabe-Verbindungen innerhalb der Exzenterschneckenpumpe montiert und demontiert werden kann, ohne dass die Schmiermittelfüllung innerhalb der Manschette für beide Kardangelenke abgelassen oder gewechselt werden muss.

Schließlich ist gemäß einer weiteren bevorzugten Ausführungsform vorgesehen, dass das erste Kardangelenk mit einer Taumelwelle verbunden ist, die mit einem zweiten Kardangelenk verbunden ist, das mit der Antriebswelle des Antriebsmotors gekoppelt ist, wobei die Taumelwelle in einem Fluidzufuhrraum angeordnet ist, der eine Fluidzufuhröffnung aufweist und der in Fluidverbindung mit dem Innenraum des Stators steht. Durch die Verbindung des Rotors über ein erstes und zweites Kardangelenk mit einer zwischen diesen beiden Kardangelenken angeordneten Taumelwelle wird eine robuste Übertragung der Antriebskraft von dem Antriebsmotor über die beiden Kardangelenke und die Taumelwelle auf den Rotor ermöglicht. Die Bereitstellung von zwei Kardangelenken und einer Taumelwelle ermöglicht dabei die spezifische Bewegungsform des Rotors innerhalb des Statorgehäuses, die in einer Überlagerung einer rotierenden und radialen Bewegung besteht.

Es ist weiterhin bevorzugt, dass der Statorausgangsflansch eine Flanschanschlussebene aufweist, die nicht senkrecht zu der Längsachse ausgerichtet ist.

Hiermit wird die Wartung vereinfacht, indem es ermöglicht wird, das Statorgehäuse mitsamt dem darin angeordneten Rotor zu verschwenken, ohne dass hierzu ein an die Exzenterschneckenpumpe angeschlossenes Einlassrohr und Austrittsrohr entfernt werden müsste. Diese Verschwenkung wird ermöglicht, indem der Statorausgangsflansch in einer Ebene liegt, die schräg zu der Längsachse des Statorgehäuses verläuft. Unter einer solchen schrägen Ausrichtung des Statorausgangsflansches ist eine Ausrichtung zu verstehen, die von der vorbekannten Ausrichtung in einem Winkel von 90° zur Längsachse abweicht. Der Statorausgangsflansch kann in einer Ausgestaltung der Erfindung parallel zu der Längsachse ausgerichtet sein. Insbesondere kann der Statorausgangsflansch in einer Ebene liegen, die schräg zu der Längsachse ausgerichtet ist, d.h. einen Winkel von 0 bis < 90° zu der Längsachse einnimmt. Als Statorausgangsflansch ist hierbei ein Verbindungsflansch zu verstehen, der entweder direkt an eine Austrittsrohrleitung angeschlossen wird, die dann eine entsprechend korrespondierende Ausgestaltung der Flanschebene aufweisen muss. Bevorzugt ist jedoch vorgesehen, dass der Statorausgangsflansch am Ende des Statorgehäuses angeordnet ist und ein Adapteranschlussstück Bestandteil der Exzenterschneckenpumpe ist, welches einerseits mit dem Statorausgangsflansch mit einem entsprechend schräg ausgerichteten Flansch verbunden ist, andererseits am hierzu gegenüberliegenden Ende einen Rohranschlussstutzen aufweist, der zum Anschluss eines Ausgangsrohres mit konventionellem Flanschanschluss ausgeführt ist. Dieses Adapterstück kann folglich bei den vorzunehmenden Wartungsarbeiten an dem angeschlossenen Austrittsrohr montiert verbleiben, da durch Lösung des Statorausgangsflansches und dessen Ausrichtung zur Längsachse ein Verschwenken des Statorgehäuses möglich ist, ohne dass hierfür ein Raumbedarf in axialer Richtung besteht.

Die Erfindung hat erkannt, dass bei Ausgestaltung der Flanschanschlüsse auf der Ausgangsseite der Exzenterschneckenpumpe mit einer Ausrichtung von 90° ein Verschwenken des Statorgehäuses nicht möglich ist, da der durch die Abwinklung hierfür notwendige erhöhte Raumbedarf in Richtung der Längsachse nicht existiert. Durch die erfindungsgemäße Ausrichtung des Statorausgangsflansches in einer anderen Ebene als der senkrechten Ebene zu der Längsachse wird die Verschwenkung des Statorgehäuses in einer bestimmten Richtung ermöglicht, indem durch die Flanschausrichtung der hierfür notwendige Platz bereitgestellt wird. Dabei ist aufgrund der Flanschausrichtung gewährleistet, dass bereits im Zuge der ersten Winkelbewegungsabschnitte der Verschwenkung des Statorgehäuses ein Abstand zwischen dem Statorausgangsflansch und dem Gegenflansch hierzu erzeugt wird und hierdurch auch eine Blockade der Verschwenkbewegung durch Fremdkörper innerhalb des Statorausgangsflansches nicht bzw. in verringerter Häufigkeit auftreten kann.

Die Ausrichtung des Statorausgangsflansches umfasst folglich Schrägstellungen des Statorausgangsflansches, beispielsweise eine Schrägstellung von 45° zur Längsachse, welche ein Verschwenken des Statorgehäuses auch dann ermöglicht, wenn beispielsweise durch einen zusätzlichen Raumbedarf bei dieser Verschwenkung in Folge einer Verbindungsgestaltung des Statorgehäuses im Bereich der Statoreinlassöffnung zusätzlicher Raumbedarf in axialer Richtung notwendig ist. Grundsätzlich ist zu verstehen, dass der Statorausgangsflansch vorzugsweise in einem solche Winkel zur Längsachse ausgerichtet ist, dass eine Verschwenkung des Statorgehäuses um eine Schwenkachse im Bereich der Statoreingangsöffnung ermöglicht wird, nachdem das Statorgehäuse im Bereich dieser Statoreingangsöffnung getrennt wurde von einem Anschlussgehäuse, in dem das erste Kardangelenk läuft. Die Verschwenkung des Rotors kann dabei vorzugsweise um eine Achse des ersten Kardangelenks erfolgen, wodurch vermieden werden kann, dass das erste Kardangelenk von dem Rotor getrennt werden muss, um die Verschwenkung auszuführen.

Gemäß einer alternativen Ausführungsform ist vorgesehen, dass der Statoreingangsflansch eine Flanschanschlussebene aufweist, die nicht senkrecht zu der Längsachse ausgerichtet ist. Diese Variante der Erfindung sieht eine Schrägstellung des Flansches im Bereich der Flanschverbindung an der Einlassseite des Statorgehäuses vor. Auch durch eine Schrägstellung dieses Statoreingangsflansches in einem Winkel, der von 90° zur Längsachse abweicht, an dieser Position kann eine Verschwenkungsmöglichkeit für das Statorgehäuse bereitgestellt werden, die keine zusätzliche axiale Freistellung an dem gegenüberliegenden Ende des Statorgehäuses notwendig macht. Vorteilhaft an dieser Ausgestaltung ist, dass das auslassseitige Ende des Statorgehäuses mit einem Statorausgangsflansch versehen sein kann, der in einem Winkel von 90° zur Längsachse steht und somit einen Anschluss eines Austrittsrohres mit konventionellem Flansch ermöglicht.

Grundsätzlich ist zu verstehen, dass der Statorausgangsflansch und vorzugsweise der Statoreingangsflansch so ausgestaltet sind, dass der Rotor durch diese Flansche hindurch geführt werden kann.

Noch weiter ist es bevorzugt, wenn die Flanschanschlussebene in einem Winkel zu der Längsachse steht, der kleiner ist als (90°-arctan(d/l)), wobei d dem Außendurchmesser des der Flanschanschlussebene gegenüberliegenden Ende des Statorgehäuses, und I der Länge des Statorgehäuses entspricht. Diese Vorgabe eines bestimmten Winkelbereichs folgt den Notwendigkeiten, die für ein Verschwenken des Statorgehäuses notwendig sind, wenn das Statorgehäuse eine bestimmte Länge aufweist und an dem Statorgehäuseende, welches dem schräg gestellten Flanschanschluss am Statorgehäuse gegenüberliegt, einen konstruktiv bedingten Außendurchmesser aufweist. Charakteristisch an dieser Konstruktion und der daraus folgenden Kinematik ist die Notwendigkeit einerseits den Statoreingangsflansch andererseits auch den hierzu gegenüberliegend am anderen Ende des Statorgehäuses befindlichen Statorausgangsflansch lösen zu müssen, um eine Verschwenkung vornehmen zu können. Die Verschwenkung des Statorgehäuses erfolgt dann typischerweise um eine Schwenkachse, die etwa im Bereich des Außenumfangs des Statorgehäuses an dem Statoreingangsflansch angesiedelt ist, wobei zu verstehen ist, dass der Rotor bei der Verschwenkung um eine Schwenkachse des ersten Kardangelenks verschwenken kann und zugleich der Rotor oder das erste Kardangelenk sich translatorisch bewegen kann, um die Distanz zwischen den Schwenkachsen des Statorgehäuses und des Rotors zu kompensieren. Um bei einer solchen Konstruktion einen für die Verschwenkung ausreichenden axialen Spielraum durch die Schrägstellung der Flanschanschlussebene zu erreichen, muss der Winkel der Flanschanschlussebene kleiner sein als 90°-arctan des Quotienten aus dem Durchmesser des Statoreingangsflansches und der Länge des Statorgehäuses. Hieraus folgt, dass der Winkel umso kleiner sein muss, je größer der Durchmesser des Statoreingangsflansches ist und je kürzer das Statorgehäuse ist. So ergibt sich beispielsweise bei einer Statorgehäusekonstruktion, bei welcher der Durchmesser des Statoreingangsflansches und die Statorgehäuselänge übereinstimmend sind, ein Schrägstellungswinkel der Flanschanschlussebene von 45° oder weniger, um ein Verschwenken des Statorgehäuses zu ermöglichen. Entspricht hingegen die Länge des Statorgehäuses dem Doppelten des Durchmessers des Statoreingangsflansches, so reicht bereits ein Winkel von 64° oder weniger aus, um die Verschwenkbarkeit zu gewährleisten. Bei einem Statorgehäuse, dessen Länge das Zehnfache des Durchmessers des Statoreingangsflansches beträgt, kann die Verschwenkbarkeit bereits bei einem Schrägstellungswinkel der Flanschanschlussebene von 84° oder weniger gewährleistet werden.

Gemäß einer weiteren bevorzugten Ausführungsform ist vorgesehen, dass der Winkel, um den die Flanschanschlussebene gegenüber der Längsachse schräg verläuft, in einer horizontalen Ebene liegt. Gemäß dieser Ausführungsform ist die Flanschanschlussebene solcher Art ausgerichtet, dass sie in einer vertikalen Ebene liegt, also senkrecht zur horizontalen Ebene. Durch diese Ausrichtung wird eine Verschwenkung des Statorgehäuses in einer horizontalen Ebene möglich, was für Wartungszwecke und die notwendige Abstützung des Statorgehäuses während einer solchen Verschwenkung eine Erleichterung darstellt. Insbesondere kann das Statorgehäuse durch diese Ausrichtung der Flanschanschlussebene seitlich so verschwenkt werden, dass der Rotor von der Statoraustrittsöffnung her zugänglich wird und in einer horizontal ausgerichteten, translatorischen Bewegung der Rotor aus dem Statorgehäuse herausgezogen werden kann oder das Statorgehäuse vom Rotor heruntergezogen werden kann.

Eine bevorzugte Ausführungsform wird anhand der Figuren beschreiben. Es zeigen:
- Figur 1: eine längsgeschnittene Seitenansicht einer bevorzugten Ausführungsform einer erfindungsgemäßen Exzenterschneckenpumpe in Betriebsstellung,
- Figur 2: eine längsgeschnittene Draufsicht der Ausführungsform gemäß Figur 1 in Betriebsstellung
- Figur 3: eine längsgeschnittene Draufsicht der Ausführungsform gemäß Figur 1 in einer Wartungsstellung mit verschwenktem Statorgehäuse,
- Figur 4: eine Ansicht gemäß Figur 3 in einer Wartungsstellung mit gelöstem Rotor,
- Figur 5: eine Ansicht gemäß Figur 2 in einer Wartungsstellung mit verschwenktem Statorgehäuse bei blockiertem Rotor.

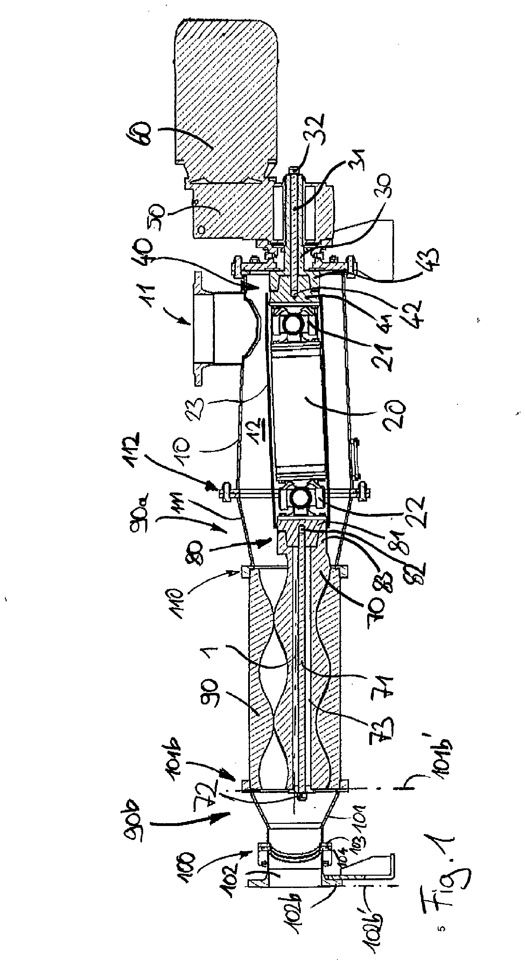

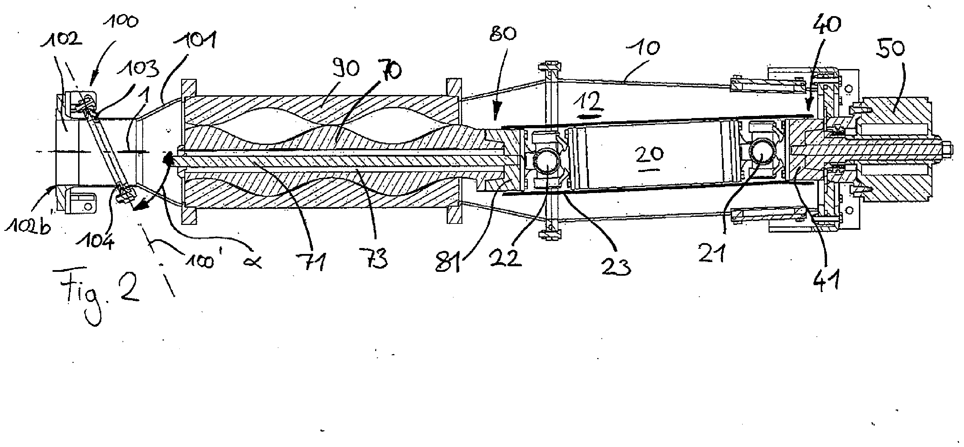

Bezugnehmend zunächst auf die Figuren 1 und 2 umfasst eine erfindungsgemäße Exzenterschneckenpumpe gemäß einer bevorzugten Ausführungsform ein Eintrittsgehäuse 10 mit einer Fluideintrittsöffnung 11, durch welche Fluid in einen Fluidzufuhrraum 12 innerhalb des Eintrittsgehäuses 10 eintreten kann.

Innerhalb des Fluidzufuhrraums 12 ist eine Taumelwelle 20 angeordnet. Die Taumelwelle 20 ist antriebsseitig mittels eines Kardangelenks 21 mit einer Hohlwelle 30 verbunden. Die Verbindung zwischen dem antriebsseitigen Kardangelenk 21 und der Hohlwelle 30 wird mittels einer als Kegelstumpfverbindung aus geführten Welle-Nabe-Verbindung 40 bewerkstelligt. Die Welle-Nabe-Verbindung 40 umfasst einen Außenkegelstumpf 41, der mit dem Kardangelenk 21 verbunden ist und in dem eine Gewindebohrung 42 ausgebildet ist. Der Außenkegelstumpf 41 wirkt mit einem Flanschelement mit einem Innenkegelstumpf 43 zusammen. Das Flanschelement mit Innenkegelstumpf ist integral mit der Hohlwelle 30 ausgebildet. Durch die Hohlwelle 30 erstreckt sich ein Zuganker 31, der an dem der Kegelstumpfverbindung 40 gegenüberliegenden Ende mittels einer Spannmutter 32 gespannt werden kann. Der Zuganker 31 ist in die Innengewindebohrung 42 in dem Außenkegelstumpfelement 41 eingeschraubt und übt eine Zugkraft auf das Außenkegelstumpfelement 41 aus, die dieses Außenkegelstumpfelement 41 in den Innenkegelstumpf 43 presst.

Die Hohlwelle 30 ist mittels eines Stirnradgetriebes 50 mit einem Antriebsmotor mit einer Antriebswelle 60 gekoppelt.

Auf der dem antriebsseitigen Kardangelenk 21 gegenüberliegenden Seite ist die Taumelwelle 20 mittels eines rotorseitigen Kardangelenks 22 mit einem Rotor 70 verbunden. Die Verbindung zwischen dem Kardangelenk 22 und dem Rotor 70 ist ebenfalls mittels einer Kegelstumpfverbindung 80 ausgeführt. Die Kegelstumpfverbindung 80 umfasst ein Außenkegelstumpfelement 81, das mit dem rotorseitigen Kardangelenk 22 verbunden ist und in dem eine Innengewindebohrung 82 ausgebildet ist. An dem zum rotorseitigen Kardangelenk weisenden Ende des Rotors 70 ist eine stirnseitige konische Ausnehmung in Form eines Innenkegelstumpfes 83 ausgeführt, die mit dem Außenkegelstumpf 81 zusammenwirkt.

In die Innengewindebohrung 82 ist ein Zuganker 71 eingeschraubt, der sich durch einen Hohlraum 73 in dem Rotor 70 erstreckt und an dem gegenüberliegenden Ende des Rotors mittels einer Spannmutter 72 gespannt werden kann.

Auf dem Außenkegelstumpf 41 ist umfangsseitig eine Manschette 23 befestigt, die sich als schlauchförmige Manschette ausgehend von dem Außenkegelstumpf 41 über das antriebsseitige Kardangelenk 21, die Taumelwelle 20 und das rotorseitige Kardangelenk 22 bis über den Außenkegelstumpf 81 erstreckt. Auf dem Außenkegelstumpf 81 ist die Manschette 23 wiederum abgedichtet befestigt. Durch die Manschette wird dadurch ein Innenraum definiert, in dem die beiden Kardangelenke und die Taumelwelle angeordnet sind und der schmiermittelgefüllt sein kann. Dieser Innenraum ist abgedichtet gegenüber dem Fluidzufuhrraum 12 und folglich wird durch die Manschette verhindert, dass mechanisch oder chemisch aggressive wirkendes Fluid an die Kardangelenke 21 oder 22 gelangt.

Die Kegelstumpfverbindung 80 und das Kardangelenk 22 befinden sich an einem eintrittsseitigen Ende des Rotors 70 bzw. eines Statorgehäuses 90 in dem der Rotor 70 angeordnet ist. Die Spannmutter 72 ist an einem austrittsseitigen Ende 90b des Statorgehäuses 90 angeordnet.

Das Statorgehäuse 90 und der Rotor 70 erstrecken sich in der in den Figuren 1 und 2 abgebildeten Betriebsstellung in einer Längsrichtung 1, die im Wesentlichen übereinstimmend mit der Längsachse der Taumelwelle 20 und der Längsachse der Hohlwelle 30 verläuft.

Am austrittsseitigen Ende 90b des Statorgehäuses ist ein Statorausgangsflansch 100 ausgebildet. Der Statorausgangsflansch 100 verbindet ein Austrittsgehäuse 101 mit einem Anschlussgehäuse 102. Das Austrittsgehäuse 101 ist mittels einer Flanschverbindung 101b mit dem Statorgehäuse 90 fluiddicht verbunden. Diese Flanschverbindung 101b weist eine Flanschanschlussebene 101b' auf, die senkrecht zur Längsachse 1 verläuft.

Das Anschlussgehäuse 102 weist für den Anschluss einer Rohrleitung eine Flanschverbindung 102b auf, die eine Flanschanschlussebene 102b' definiert, die ebenfalls senkrecht zur Längsachse 1 verläuft. Die Flanschanschlussebenen 101b' und 102b' sind somit parallel zueinander.

Die Flanschverbindung zwischen dem Anschlussgehäuse 102 und dem Austrittsgehäuse 101 weist eine Flanschanschlussebene 100' auf, die in einem Winkel α zur Längsachse 1 des Statorgehäuses steht. Dieser Winkel α ist kleiner als 90° und beträgt im Ausführungsbeispiel 65°.

Die Flanschverbindung 100 wird durch Aufliegen von zwei Flanschflächen 103, 104 an dem Anschlussgehäuse 102 und an dem Austrittsgehäuse 101 gebildet. Diese beiden Flanschflächen sind als ringförmige Flächen ausgebildet und können mittels mehrerer Schrauben in der Flanschanschlussebene 100' aufeinandergepresst werden, sodass eine dichte Flanschverbindung entsteht.

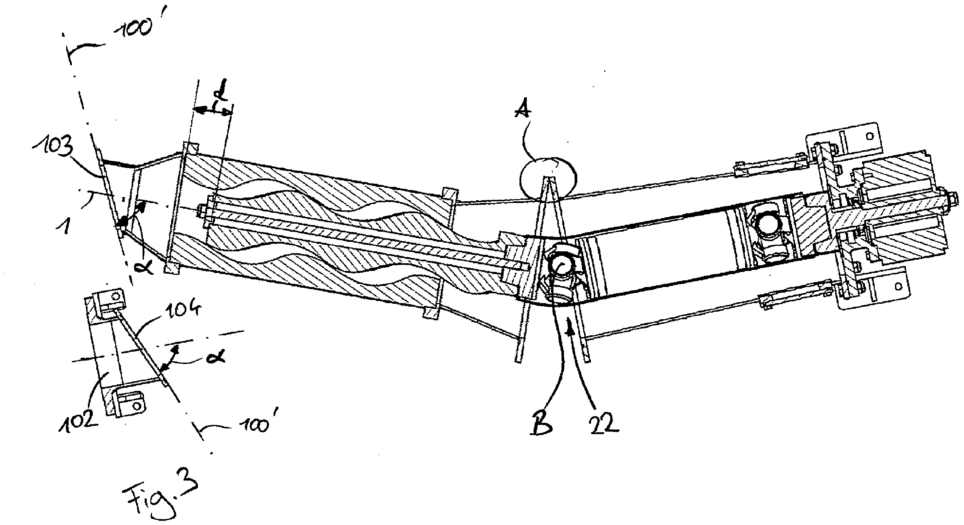

Das Statorgehäuse 90 ist auf der Eintrittsseite 90a mittels einer Flanschverbindung 110 mit einem Eintrittsgehäuse 111 verbunden, das wiederum mittels einer Flanschverbindung 112 mit dem Eintrittsgehäuse 10 verbunden ist. Durch Lösen der Flanschverbindung 112 und Lösen der Flanschverbindung 100 kann, wie aus Figur 3 ersichtlich, das Statorgehäuse in Bezug auf das Eintrittsgehäuse 10 verschwenkt werden. Die Schwenkachse des Statorgehäuses liegt dabei etwa in einem Bereich A im Außenumfangsbereich der Flanschverbindung 112. Die Schwenkachse des Rotors, der sich bei diesem Schwenkvorgang im Statorgehäuse 90 befindet, liegt kongruent zu einer Schwenkachse B des Kardangelenks 22. Die Schwenkachsen A und B des Statorgehäuses 90 und des Rotors 70 sind voneinander beabstandet. Um die Schwenkbewegung auszuführen, bewegt sich der Rotor 70 daher in axialer Richtung entlang der Längsachse 1 innerhalb des Statorgehäuses um die Distanz d. Die Schwenkbewegung des Statorgehäuses um die Achse A und die damit einhergehende, durch die räumliche Abmessungen des Statorgehäuses und des daran montierten Eintrittsgehäuses und Austrittsgehäuses bedingte Längenraumbedarf wird durch die Schrägstellung der Flanschanschlussfläche 100' ermöglicht. Die in Figur 3 gezeigte Verschwenkung des Statorgehäuses kann daher bei feststehendem Anschlussgehäuse 102 und feststehendem Eintrittsgehäuse 10 durchgeführt werden. Dies hat zur Folge, dass eine Rohrleitung, die an den Anschlussflansch 102b des Anschlussgehäuses 102 angeschlossen ist und eine Rohrleitung, die an die Fluideintrittsöffnung 11 angeschlossen ist, für die Zwecke dieser Verschwenkung nicht demontiert werden müssen.

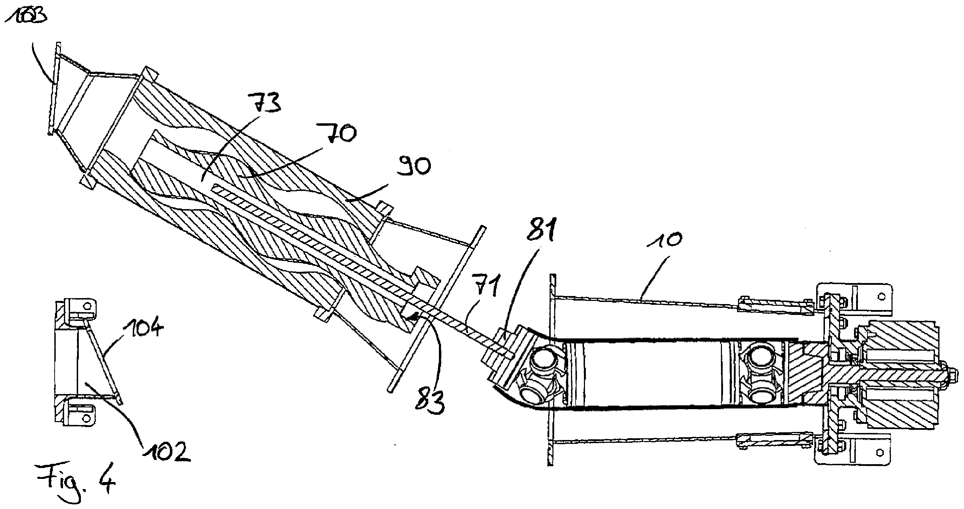

Figur 4 zeigt die Exzenterschneckenpumpe gemäß Figur 3 in einer weiteren, fortgeschrittenen Wartungsposition. In dieser fortgeschrittenen Wartungsposition ist die Spannmutter 72 an dem auslassseitigen Rotorende demontiert und die Kegelstumpfverbindung 80 gelöst. Der Zuganker 71 kann daher an dem Außenkegelstumpf 81 verbleiben und aus dem Hohlraum 73 des Rotors herausgezogen werden. Dies ermöglicht eine Entfernung des Statorgehäuses 90 und des darin angeordneten Rotors 70 zum Zwecke des Austausches des Rotors, des Statorgehäuses oder beider Bauteile.

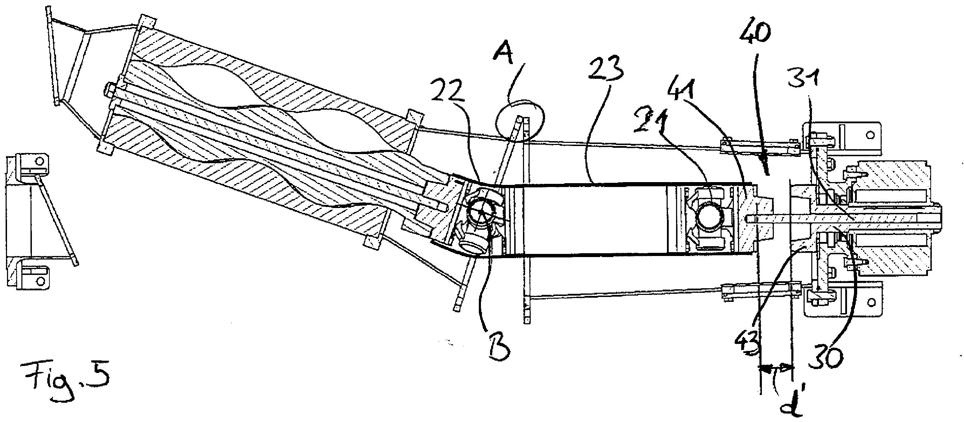

Figur 5 zeigt eine Variante der Wartung der Exzenterschneckenpumpe. Diese Variante der Wartung ist notwendig, wenn der Rotor innerhalb des Stators blockiert ist und folglich die Axialbewegung um die Distanz d nicht möglich ist.

Um in einer solche Situation gleichwohl eine vereinfachte Wartung mit Verschwenkung des Statorgehäuses um eine Achse im Bereich A zu ermöglichen und hierbei gleichzeitig den Rotor um eine von der Achse im Bereich A beabstandete Achse B des rotorseitigen Kardangelenks zu verschwenken wird die Spannmutter 32 des Zugankers 31 innerhalb der Hohlwelle 30 gelöst und hierdurch die Kegelstumpfverbindung 40 gelöst. Durch diese Lösung der Kegelstumpfverbindung 40 kann nun der Rotor mitsamt der beiden Kardangelenke 21, 22 und der Taumelwelle 20 um eine Distanz d' axial bewegt werden und hierdurch die Verschwenkung von Statorgehäuse 90 und Rotor 70 in der blockierten Form um die zwei voneinander beabstandeten Schwenkachsen im Bereich A und B durch eine translatorische Bewegung der Schwenkachse ermöglicht werden. Auch diese Verschwenkung kann ohne Demontage einer Rohrleitung an dem Anschlussgehäuse 102 und der Fluideintrittsöffnung 11 erfolgen.

## Patentansprüche

1. Exzenterschneckenpumpe, umfassend:
- Einen Rotor (70), der sich entlang einer Rotorlängsachse von einem Antriebsende zu einem freien Ende erstreckt, wobei der Rotor einen sich entlang der Längsachse erstreckenden Hohlraum (73) aufweist
- Ein Statorgehäuse (90) mit einem Innenraum, der sich entlang der Längsachse von einer Statoreinlassöffnung zu einer Statoraustrittsöffnung erstreckt und ausgebildet ist, um den Rotor aufzunehmen,
- Einen Antriebsmotor mit einer Antriebswelle (60), die mit dem Rotor zur Übertragung eines Drehmoments gekoppelt ist,
- Ein erstes Kardangelenk (22), welches in die Übertragung des Drehmoments zwischen die Antriebswelle (60) und den Rotor (70) eingesetzt ist,
- Einen Statorausgangsflansch, der in Strömungsrichtung hinter dem Rotor angeordnet ist,
**dadurch gekennzeichnet, dass** der Rotor mittels einer ersten Welle-Nabe-Verbindung (80) mit dem ersten Kardangelenk (22) verbunden ist,
- dass ein erstes Spannelement (71, 72), das auf der Seite der Statoreinlassöffnung mit der ersten Welle-Nabe-Verbindung (80) verbunden ist, sich durch den Hohlraum (73) des Rotors (70) erstreckt und auf der Seite der Statoraustrittsöffnung mit einem Werkzeug betätigbar ist oder mittels eines sich durch diesen Hohlraum erstreckenden Werkzeugs betätigbar ist, und
- dass von der Seite der Statoraustrittsöffnung aus mittels des an das erste Spannelement angesetzten Werkzeugs die erste Welle-Nabe-Verbindung (80) verbunden und gelöst werden kann.

2. Exzenterschneckenpumpe nach Anspruch 1,
**dadurch gekennzeichnet, dass** der Rotor mittels einer ersten Welle-Nabe-Verbindung mit dem ersten Kardangelenk verbunden ist und
dass die erste Welle-Nabe-Verbindung als erste Kegelstumpfverbindung (81, 83) ausgeführt ist.

3. Exzenterschneckenpumpe nach Anspruch 1 und 2,
**dadurch gekennzeichnet, dass** das erste Spannelement (71, 72) mit einem mit dem ersten Kardangelenk verbundenen ersten Kegelstumpfelement (81) der ersten Kegelstumpfverbindung verbunden ist und über das erste Spannelement eine Zugkraft auf die erste Kegelstumpfverbindung ausgeübt wird, welche das erste Kegelstumpfelement (81) kraftschlüssig mit einem zweiten Kegelstumpfelement (83) der ersten Kegelstumpfverbindung verpresst, das mit dem Rotor (70) verbunden ist, und
dass von der Seite der Statoraustrittsöffnung aus mittels des an das erste Spannelement (71, 72) angesetzten Werkzeugs die erste Kegelstumpfverbindung verbunden und gelöst werden kann.

4. Exzenterschneckenpumpe nach einem der vorhergehenden Ansprüche,
**dadurch gekennzeichnet, dass** das erste Kardangelenk mit einer Taumelwelle (20) verbunden ist, die mit einem zweiten Kardangelenk (21) verbunden ist, das mittels einer zweiten Welle-Nabe-Verbindung (40) mit einer mit dem Antriebsmotor gekoppelten Hohlwelle (30) verbunden ist, und
dass die zweite Welle-Nabe-Verbindung durch ein zweites Spannelement (31, 32) verbunden und gelöst werden kann,
wobei
- sich das zweite Spannelement (31, 32) durch die Hohlwelle erstreckt, auf der Seite des zweiten Kardangelenks (21) mit der zweiten Welle-Nabe-Verbindung (40) verbunden ist, und auf der dem zweiten Kardangelenk gegenüberliegenden Seite der Hohlwelle mit einem Werkzeug betätigbar ist, oder
- das zweite Spannelement mittels eines sich durch die Hohlwelle erstreckenden Werkzeugs betätigbar ist, und
dass von der dem zweiten Kardangelenk gegenüberliegenden Seite der Hohlwelle aus mittels des an das zweite Spannelement angesetzten Werkzeugs die zweite Welle-Nabe-Verbindung verbunden und gelöst werden kann.

5. Exzenterschneckenpumpe nach Anspruch 4,
**dadurch gekennzeichnet, dass** die zweite Welle-Nabe-Verbindung als zweite Kegelstumpfverbindung (41, 43) ausgeführt ist, und
dass das zweite Spannelement (31, 32) mit einem mit dem zweiten Kardangelenk verbundenen ersten Kegelstumpfelement (41) der zweiten Kegelstumpfverbindung verbunden ist und über das zweite Spannelement eine Zugkraft auf die zweite Kegelstumpfverbindung ausgeübt wird, welche das erste Kegelstumpfelement (41) kraftschlüssig mit einem zweiten Kegelstumpfelement (43) der zweiten Kegelstumpfverbindung verpresst, welches mit der Hohlwelle (20) verbunden ist.

6. Exzenterschneckenpumpe nach einem der Ansprüche 4 oder 5,
**dadurch gekennzeichnet, dass** die Hohlwelle mittels eines Getriebes, insbesondere eines Stirnradgetriebes mit der Antriebswelle (60) des Antriebsmotors gekoppelt ist.

7. Exzenterschneckenpumpe nach einem der vorhergehenden Ansprüche,
**dadurch gekennzeichnet, dass** um das erste (22) und/oder das zweite Kardangelenk (21) eine erste bzw. zweite Manschette (23) angeordnet ist, welche einen schmiermittelgefüllten Innenraum, in dem sich das erste bzw. zweite Kardangelenk befindet, gegen die Umgebung abdichtet.

8. Exzenterschneckenpumpe nach Anspruch 7,
**dadurch gekennzeichnet, dass** das erste Kardangelenk mittels einer ersten Welle-Nabe-Verbindung, umfassend einen kardangelenkseitigen Flansch und einen mit diesem lösbar verbundenen rotorseitigen Flansch mit dem Rotor gekoppelt ist und dass die erste Manschette sich ausgehend von einer abdichtenden Befestigung an dem kardangelenkseitigen Flansch über das erste Kardangelenk erstreckt, und/oder
dass das zweite Kardangelenk mittels einer zweiten Welle-Nabe-Verbindung, umfassend einen kardangelenkseitigen Flansch und einen mit diesem lösbar verbundenen antriebswellenseitigen Flansch, mit der Antriebswelle gekoppelt ist und dass die zweite Manschette sich ausgehend von einer abdichtenden Befestigung an dem kardangelenkseitigen Flansch über das zweite Kardangelenk erstreckt.

9. Exzenterschneckenpumpe nach Anspruch 7 oder 8,
**dadurch gekennzeichnet, dass** die erste und zweite Manschette als eine einzige Manschette (23) integral ausgeführt sind und dass ein erstes Ende der Manschette auf einer zwischen dem ersten Kardangelenk und dem Rotor angeordneten Umfangsfläche abdichtend befestigt ist und das ein zweites Ende der Manschette auf einer zwischen dem zweiten Kardangelenk und Antriebswelle, insbesondere der Hohlwelle, angeordneten Umfangsfläche abdichtend befestigt ist.

10. Exzenterschneckenpumpe nach einem der vorhergehenden Ansprüche,
**dadurch gekennzeichnet, dass** der Statorausgangsflansch (100) eine Flanschanschlussebene (101b') aufweist, die nicht senkrecht zu der Längsachse ausgerichtet ist.

11. Exzenterschneckenpumpe nach einem der vorhergehenden Ansprüche, umfassend einen Statoreingangsflansch, der in Strömungsrichtung im Bereich oder vor der Statoreinlassöffnung angeordnet ist,
**dadurch gekennzeichnet, dass** der Statoreingangsflansch eine Flanschanschlussebene aufweist, die nicht senkrecht zu der Längsachse ausgerichtet ist.

12. Exzenterschneckenpumpe nach Anspruch 10 oder 11,
**dadurch gekennzeichnet, dass** die Flanschanschlussebene in einem Winkel zu der Längsachse steht, der kleiner als 90° ist.

13. Exzenterschneckenpumpe nach einem der Ansprüche 10-12,
**dadurch gekennzeichnet, dass** die Flanschanschlussebene in einem Winkel zu der Längsachse steht, der kleiner ist als (90°-arctan(d/l)), wobei
- d dem Außendurchmesser des der Flanschanschlussebene gegenüberliegenden Ende des Statorgehäuses, und
- I der Länge des Statorgehäuses
entspricht.

14. Exzenterschneckenpumpe nach einem der vorhergehenden Ansprüche 10-13
**dadurch gekennzeichnet, dass** der Winkel, um den die Flanschanschlussebene gegenüber der Längsachse schräg verläuft, in einer horizontalen Ebene liegt.

15. Exzenterschneckenpumpe nach einem der vorhergehenden Ansprüche 10-14
**dadurch gekennzeichnet, dass** das erste Kardangelenk (22) mit einer Taumelwelle (20) verbunden ist, die mit einem zweiten Kardangelenk (21) verbunden ist, das mit der Antriebswelle des Antriebsmotors gekoppelt ist,
wobei die Taumelwelle in einem Fluidzufuhrraum angeordnet ist, der eine Fluidzufuhröffnung aufweist und der in Fluidverbindung mit dem Innenraum des Stators steht.

## Claims

1. Eccentric screw pump, comprising:
- a rotor (70) which extends along a longitudinal axis of the rotor from a drive end to a free end, the rotor having a cavity (73) extending along the longitudinal axis
- A stator housing (90) with an interior space which extends along the longitudinal axis from a stator inlet opening to a stator outlet opening and is designed to accommodate the rotor,
- A drive motor with a drive shaft (60) which is coupled with the rotor to transmit a torque,
- A first cardan joint (22) which is placed in the transmission of the torque between the drive shaft (60) and the rotor (70),
- A stator outlet flange which is arranged in the direction of flow behind the rotor,
wherein the rotor is connected to the first cardan joint (22) by means of a first shaft-hub connection (80),
- in that a first tensioning element (71, 72), which is connected to the first shaft-hub connection (80) on the side of the stator inlet opening, extends through the cavity (73) of the rotor (70) and is actuable with a tool on the side of the stator outlet opening or is actuable by means of a tool extending through this cavity, and
- in that the first shaft-hub connection (80) can be connected and disconnected from the side of the stator outlet opening by means of the tool attached to the first tensioning element.

2. Eccentric screw pump according to claim 1,
wherein the rotor is connected to the first cardan joint by means of a first shaft-hub connection and
wherein the first shaft-hub connection is designed as a first frusto-conical connection (81, 83).

3. Eccentric screw pump according to claim 1 and 2,
wherein the first tensioning element (71, 72) is connected to a first frusto-conical element (81) of the first frusto-conical connection which is connected to the first cardan joint, wherein a tensile force is exercised via the first tensioning element on the frusto-conical connection, which force-fits the first frusto-conical element (81) to a second frusto-conical element (83) of the first frusto-conical connection, and wherein the second frusto-conical element is connected to the rotor (70), and wherein the first frusto-conical connection can be connected and disconnected from the side of the stator outlet opening by means of the tool attached to the first tensioning element (71, 72).

4. Eccentric screw pump according to any of the preceding claims,
wherein the first cardan joint is connected to a wobble shaft (20) which is connected to a second cardan joint (21) wherein the second cardan joint (21) is coupled with a hollow shaft (30), and wherein the hollow shaft (30) is coupled with the drive motor by a shaft-hub connection (40), and
wherein the second shaft-hub connection can be connected and disconnected by a second tensioning element (31, 32),
wherein
- the second tensioning element (31, 32) extends through the hollow shaft, is connected to the second shaft-hub connection (40) on the side of the second cardan joint (21), and is actuable with a tool on the side of the hollow shaft opposite the second cardan joint, or
- the second tensioning element is operable by means of a tool extending through the hollow shaft, and
in that the second shaft-hub connection can be connected and disconnected from the side of the hollow shaft opposite the second cardan joint by means of the tool attached to the second tensioning element.

5. Eccentric screw pump according to claim 4,
wherein the second shaft-hub connection is designed as a second frusto-conical connection (41, 43), and
wehrein the second tensioning element (31, 32) is connected to a first frusto-conical element (41), which is connected to the second cardan joint, of the second frusto-conical connection, and a tensile force is exerted on the second frusto-conical connection via the second tensioning element, which tensile force presses the first frusto-conical element (41) in a force-fitting manner against a second frusto-conical element (43) of the second frusto-conical connection, which frusto-conical element is connected to the hollow shaft (20).

6. Eccentric screw pump according to one of claims 4 or 5,
wherein the hollow shaft is coupled to the drive shaft (60) of the drive motor by means of a gear, in particular a spur gear.

7. Eccentric screw pump according to any of the preceding claims,
wherein a first and/or second sleeve (23) is arranged around the first (22) and/or the second cardan joint (21), said sleeve sealing a lubricant-filled interior space from the environment wherein said first and/or joint is located inside said space.

8. Eccentric screw pump according to claim 7,
wherein the first cardan joint is coupled to the rotor by means of a first shaft-hub connection comprising a cardan joint-side flange and a rotor-side flange detachably connected thereto, and in that the first sleeve extends over the first cardan joint starting from a sealing attachment to the cardan joint-side flange, and/or
wherein the second cardan joint is coupled to the drive shaft by means of a second shaft-hub connection comprising a cardan joint-side flange and a drive shaft-side flange detachably connected thereto, and that the second sleeve extends over the second cardan joint starting from a sealing attachment to the cardan joint-side flange.

9. Eccentric screw pump according to claim 7 or 8,
wherein the first and second sleeves are integrally formed as a single sleeve (23) and in that a first end of the sleeve is sealingly secured on a circumferential surface disposed between the first cardan joint and the rotor and in that a second end of the sleeve is sealingly secured on a circumferential surface disposed between the second cardan joint and the drive shaft, in particular the hollow shaft.

10. Eccentric screw pump according to any of the preceding claims,
wherein the stator output flange (100) has a flange connection plane (101b') which is not oriented perpendicular to the longitudinal axis.

11. Eccentric screw pump according to any one of the preceding claims, comprising a stator inlet flange arranged in the flow direction in the region of or upstream of the stator inlet opening,
wherein the stator inlet flange has a flange connection plane which is not aligned perpendicular to the longitudinal axis.

12. Eccentric screw pump according to claim 10 or 11,
wherein the flange connection plane is at an angle to the longitudinal axis which is less than 90°.

13. Eccentric screw pump according to any one of claims 10-12,
wherein the flange connection plane is at an angle to the longitudinal axis which is less than (90°-arctan(d/l)), wherein
- d is the outside diameter of the end of the stator housing opposite the flange connection plane, and
- I the length of the stator housing.

14. Eccentric screw pump according to any one of the preceding claims 10-13
wherein the angle of inclination of the flange connection plane with respect to the longitudinal axis lies in a horizontal plane.

15. Eccentric screw pump according to any of the preceding claims 10-14
wherein the first cardan joint (22) is connected to a wobble shaft (20) which is connected to a second cardan joint (21) which is coupled to the drive shaft of the drive motor,
wherein the wobble shaft is arranged in a fluid supply chamber which has a fluid supply opening and which is in fluid communication with the interior of the stator.

## Revendications

1. Pompe à vis sans fin excentrique, comprenant :
- un rotor (70), qui s'étend le long d'un axe longitudinal de rotor d'une extrémité d'entraînement à une extrémité libre, dans laquelle le rotor présente une cavité (73) s'étendant le long de l'axe longitudinal,
- un carter de stator (90) avec un espace intérieur, qui s'étend le long de l'axe longitudinal d'une ouverture d'entrée de stator à une ouverture de sortie de stator et est réalisé pour recevoir le rotor,
- un moteur d'entraînement avec un arbre d'entraînement (60), qui est accouplé au rotor pour la transmission d'un couple,
- un premier joint de cardan (22), lequel est utilisé dans la transmission du couple entre l'arbre d'entraînement (60) et le rotor (70),
- une bride de sortie de stator, qui est disposée derrière le rotor dans la direction d'écoulement,
**caractérisée en ce que** le rotor est relié au premier joint de cardan (22) au moyen d'une première liaison arbre-moyeu (80),
- qu'un premier élément de serrage (71, 72), qui est relié à la première liaison arbre-moyeu (80) sur la face de l'ouverture d'entrée de stator, s'étend à travers la cavité (73) du rotor (70) et sur la face de l'ouverture de sortie de stator peut être actionné avec un outil ou peut être actionné au moyen d'un outil s'étendant à travers cette cavité, et
- qu'à partir de la face de l'ouverture de sortie de stator la première liaison arbre-moyeu (80) peut être reliée et libérée au moyen de l'outil appliqué sur le premier élément de serrage.

2. Pompe à vis sans fin excentrique selon la revendication 1,
**caractérisée en ce que** le rotor est relié au premier joint de cardan au moyen d'une première liaison arbre-moyeu et
que la première liaison arbre-moyeu est réalisée en tant que première liaison tronconique (81, 83).

3. Pompe à vis sans fin excentrique selon la revendication 1 et 2,
**caractérisée en ce que** le premier élément de serrage (71, 72) est relié à un premier élément tronconique (81) de la première liaison tronconique relié au premier joint de cardan et une force de traction est exercée sur la première liaison tronconique par l'intermédiaire du premier élément de serrage, laquelle presse le premier élément tronconique (81) à force avec un deuxième élément tronconique (83) de la première liaison tronconique, qui est relié au rotor (70),
et
qu'à partir de la face de l'ouverture de sortie de stator la première liaison tronconique peut être reliée et libérée au moyen de l'outil appliqué sur le premier élément de serrage (71, 72).

4. Pompe à vis sans fin excentrique selon l'une quelconque des revendications précédentes,
**caractérisée en ce que** le premier joint de cardan est relié à un arbre oscillant (20), qui est relié à un deuxième joint de cardan (21), qui est relié à un arbre creux (30) accouplé au moteur d'entraînement au moyen d'une deuxième liaison arbre-moyeu (40), et
que la deuxième liaison arbre-moyeu peut être reliée et libérée par un deuxième élément de serrage (31, 32),
dans laquelle
- le deuxième élément de serrage (31, 32) s'étend à travers l'arbre creux, est relié à la deuxième liaison arbre-moyeu (40) sur la face du deuxième joint de cardan (21), et peut être actionné avec un outil sur la face de l'arbre creux opposée au deuxième joint de cardan,
ou
- le deuxième élément de serrage peut être actionné au moyen d'un outil s'étendant à travers l'arbre creux, et
qu'à partir de la face de l'arbre creux opposée au deuxième joint de cardan, la deuxième liaison arbre-moyeu peut être reliée et libérée au moyen de l'outil appliqué sur le deuxième élément de serrage.

5. Pompe à vis sans fin excentrique selon la revendication 4,
**caractérisée en ce que** la deuxième liaison arbre-moyeu est réalisée en tant que deuxième liaison tronconique (41, 43), et
que le deuxième élément de serrage (31, 32) est relié à un premier élément tronconique (41) de la deuxième liaison tronconique relié au deuxième joint de cardan et une force de traction est exercée sur la deuxième liaison tronconique par l'intermédiaire du deuxième élément de serrage, laquelle presse le premier élément tronconique (41) à force avec un deuxième élément tronconique (43) de la deuxième liaison tronconique, lequel est relié à l'arbre creux (20).

6. Pompe à vis sans fin excentrique selon l'une quelconque des revendications 4 ou 5,
**caractérisée en ce que** l'arbre creux est accouplé à l'arbre d'entraînement (60) du moteur d'entraînement au moyen d'un engrenage, en particulier d'un engrenage cylindrique à denture droite.

7. Pompe à vis sans fin excentrique selon l'une quelconque des revendications précédentes,
**caractérisée en ce qu'**un premier ou deuxième manchon (23), lequel étanchéifie vis-à-vis de l'environnement un espace intérieur rempli de lubrifiant, dans lequel le premier ou deuxième joint de cardan se trouve, est disposé autour du premier (22) et/ou du deuxième joint de cardan (21).

8. Pompe à vis sans fin excentrique selon la revendication 7,
**caractérisée en ce que** le premier joint de cardan est accouplé au rotor au moyen d'une première liaison arbre-moyeu, comprenant une bride côté joint de cardan et une bride côté rotor reliée à celle-ci de manière détachable et que le premier manchon s'étend à partir d'une fixation assurant une étanchéité sur la bride côté joint de cardan au-dessus du premier joint de cardan,
et/ou
que le deuxième joint de cardan est accouplé à l'arbre d'entraînement au moyen d'une deuxième liaison arbre-moyeu, comprenant une bride côté joint de cardan et une bride côté arbre d'entraînement reliée de manière détachable à celle-ci et que le deuxième manchon s'étend à partir d'une fixation assurant une étanchéité sur la bride côté joint de cardan au-dessus du deuxième joint de cardan.

9. Pompe à vis sans fin excentrique selon la revendication 7 ou 8,
**caractérisée en ce que** les premier et deuxième manchons sont réalisés d'un seul tenant en tant que manchon (23) unique et qu'une première extrémité du manchon est fixée de manière étanche sur une surface périphérique disposée entre le premier joint de cardan et le rotor et qu'une deuxième extrémité du manchon est fixée de manière étanche sur une surface périphérique disposée entre le deuxième joint de cardan et un arbre d'entraînement, en particulier l'arbre creux.

10. Pompe à vis sans fin excentrique selon l'une quelconque des revendications précédentes,
**caractérisée en ce que** la bride de sortie de stator (100) présente un plan de raccordement de bride (101b'), qui n'est pas orienté perpendiculairement à l'axe longitudinal.

11. Pompe à vis sans fin excentrique selon l'une quelconque des revendications précédentes, comprenant une bride d'entrée de stator, qui est disposée dans la zone ou devant l'ouverture d'entrée de stator dans la direction d'écoulement,
**caractérisée en ce que** la bride d'entrée de stator présente un plan de raccordement de bride qui n'est pas orienté perpendiculairement à l'axe longitudinal.

12. Pompe à vis sans fin excentrique selon la revendication 10 ou 11,
**caractérisée en ce que** le plan de raccordement de bride se tient par rapport à l'axe longitudinal selon un angle qui est inférieur à 90°.

13. Pompe à vis sans fin excentrique selon l'une quelconque des revendications 10-12,
**caractérisée en ce que** le plan de raccordement de bride se tient par rapport à l'axe longitudinal selon un angle qui est inférieur à (90°-arctand(d/I)), dans laquelle
- d correspond au diamètre extérieur de l'extrémité du carter de stator opposée au plan de raccordement de bride, et
- I à la longueur du carter de stator.

14. Pompe à vis sans fin excentrique selon l'une quelconque des revendications précédentes 10-13
**caractérisée en ce que** l'angle selon lequel le plan de raccordement de bride s'étend de manière oblique par rapport à l'axe longitudinal se situe dans un plan horizontal.

15. Pompe à vis sans fin excentrique selon l'une quelconque des revendications précédentes 10-14
**caractérisée en ce que** le premier joint de cardan (22) est relié à un arbre oscillant (20), qui est relié à un deuxième joint de cardan (21), qui est accouplé à l'arbre d'entraînement du moteur d'entraînement,
dans laquelle l'arbre oscillant est disposé dans un espace d'amenée de fluide, qui présente une ouverture d'amenée de fluide et qui est en liaison fluidique avec l'espace intérieur du stator.
